(19) Europäisches Patentamt / European Patent Office / Office européen des brevets

(11) EP 2 218 498 A2

(12) **DEMANDE DE BREVET EUROPEEN**

(43) Date de publication:
**18.08.2010 Bulletin 2010/33**

(21) Numéro de dépôt: **10370004.3**

(22) Date de dépôt: **12.02.2010**

(51) Int Cl.:
***B01J 13/16*** *(2006.01)* ***D06M 23/12*** *(2006.01)*
***F28D 20/02*** *(2006.01)*

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **17.02.2009 FR 0951008**

(71) Demandeur: **Despature et Fils Sas**
**59100 Roubaix (FR)**

(72) Inventeurs:
- **Maret, Olivier**
  **59420 Mouvaux (FR)**
- **Tillmann, Brice**
  **59510 HEM (FR)**
- **Bedek, Gauthier**
  **59000 Lille (FR)**
- **Salaun, Fabien**
  **59100 Roubaix (FR)**
- **Devaux, Eric**
  **59211 Santes (FR)**
- **Dupont, Daniel**
  **59780 Baisieux (FR)**
- **Deranton, Denis**
  **59510 Forest sur Marque (FR)**

(74) Mandataire: **Matkowska, Franck**
**Matkowska & Associés**
**9 Rue Jacques Prévert**
**59650 Villeneuve d'Ascq (FR)**

(54) **Microcapsules pour textile auto-rafraîchissant**

(57) La présente invention se rapporte à des microcapsules pour textile auto-rafraîchissant, comprenant une membrane encapsulant un polyol, ladite membrane étant perméable à l'eau et substantiellement imperméable au polyol.

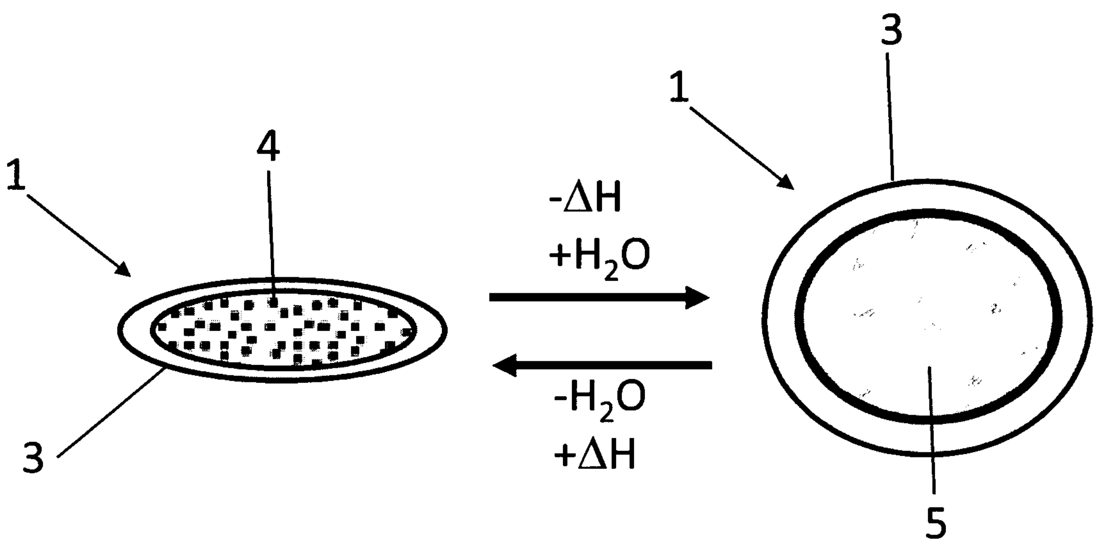


Figure 3

EP 2 218 498 A2

## Description

### Objet de l'invention

La présente invention se rapporte à des microcapsules rafraîchissantes destinées à être intégrées dans un textile auto-rafraîchissant.

De manière plus générale, la présente invention se rapporte au domaine du confort thermique procuré par des vêtements. Plus spécifiquement, l'invention se destine aux articles textiles de l'habillement en environnement chaud, permettant une absorption de l'humidité et produisant une sensation de fraîcheur lors de la sudation.

### Etat de la technique

De nos jours, les matériaux textiles thermorégulants sont constitués de matériaux composites dans lesquels l'air emprisonné est le principal élément isolant. Afin d'apporter un confort thermique, les matériaux à changement de phase sont aujourd'hui largement utilisés dans l'élaboration de fibres, d'étoffes ou encore de mousses thermorégulantes pour l'habillement.

En ciblant le confort en environnement chaud, ce type de technologie ne suffit pas pour apporter un confort satisfaisant aux porteurs. En effet, un facteur déterminant est la diffusion de l'humidité entre et dans les fibres textiles. Cette diffusion dépend essentiellement des qualités hydrophiles des matériaux utilisés, mais également de la structure des étoffes.

Actuellement, afin de ne pas gêner les phénomènes naturels de sudation, l'humidité de la peau est évacuée le plus rapidement possible vers la face externe des étoffes des vêtements par des propriétés d'évacuations physique (forme, diamètre des fibres...), ou chimique (traitement hydrophile...).

La chaleur sensible est la quantité de chaleur qui est échangée, sans transition de phase physique, entre deux corps formant un système isolé. Elle est qualifiée de « sensible » parce que cet échange de chaleur sans changement de phase modifie la température du corps, effet qui peut être ressenti ou mesuré par un observateur. L'eau permet d'absorber, dans un intervalle de température compris entre 1°C et 99°C, pour une élévation de 1°C, 4,18J/g.

La chaleur sensible s'oppose à la « chaleur latente », qui, elle, est absorbée lors d'un changement de phase, sans changement de température, puisque le changement de phase d'un corps pur est isotherme. Ce type de matériau, principalement composé de Polymères à Changements de Phase (PCM), est susceptible d'emmagasiner et de restituer de l'énergie thermique par le biais de son changement d'état, le plus souvent de solide à liquide, mais également de solide à solide. L'échange thermique dû à la variation d'enthalpie associée au changement de phase s'effectue à une température précise. Par le fait que la chaleur échangée est étroitement liée à une température, ce mode de stockage est plus intéressant que celui cité précédemment, puisqu'il met en oeuvre des quantités de stockages de chaleur Q plus importantes à une température donnée.

Le choix du bon matériau stockant peut se faire selon des critères thermodynamiques, cinétiques, chimiques, et économiques. Parmi ces critères voici les principaux paramètres :

- La température de fusion : $T_f$
- La température de cristallisation : $T_c$
- L'enthalpie de changement de phase : $\Delta H$
- La conductivité thermique : $\lambda$

Enfin, des réactions physico-chimiques peuvent induire des effets endothermiques (absorbant la chaleur depuis l'environnement) ou exothermiques (produisant de la chaleur vers l'environnement). A titre d'exemple, le document WO2006/118708, divulgue l'utilisation du xylitol, et/ou de l'érythritol comme agent rafraîchissant par dissolution de ces produits dans une solution saline (processus de dissolution endothermique). Ces produits sont mélangés sous forme de fines particules à des fibres absorbantes et sont incluses dans des dispositifs jetables (langes).

Le document WO2007/078362 décrit des microcapsules comprenant des substances actives destinées à être intégrées à des textiles. Les microcapsules décrites sont conçues de manière à se rompre sous l'effet du frottement, libérant la substance active de manière irréversible. Les microcapsules sont donc consommées au cours de la durée de vie du textile. Pour cette raison, des entreprises commerciales proposent des « recharges » permettant de rétablir le caractère rafraîchissant du textile par l'ajout de capsules neuves.

Dans les deux cas, le produit rafraîchissant une fois solubilisé et à l'état liquide est libre. Il est alors soit absorbé par des fibres adsorbant l'eau dans le cas des langes, soit, laissé à l'état liquide, imprégnant le textile, au contact de la peau. Dans les deux cas, l'élément actif est perdu une fois qu'il a joué son rôle rafraîchissant.

## Buts de l'invention

La présente invention vise à fournir des microcapsules destinées à être intégrées dans un textile auto-rafraîchissant ne présentant pas les inconvénients de l'état de la technique.
En particulier, la présente invention vise à fournir des microcapsules dont l'effet rafraîchissant est réversible, permettant ainsi une durée de vie prolongée.
La présente invention vise aussi à permettre une meilleure évacuation de la sueur par absorption/adsorption de l'humidité par les microcapsules.

## Résumé de l'invention

La présente invention divulgue des microcapsules pour textile auto-rafraîchissant, ladite microcapsule comprenant une membrane encapsulant un polyol, ladite membrane étant perméable à l'eau et substantiellement imperméable au polyol.
Selon des modes préférés de l'invention, les microcapsules comportent au moins une, ou une combinaison quelconque appropriée des caractéristiques suivantes :

- le polyol est sélectionné parmi le groupe du Xylitol, du Sorbitol, du D-mannitol et de l'Erythritol;
- lesdites membranes sont des membranes de polymères, de préférence du polyuréthanne;
- les microcapsules ont un diamètre compris entre 0,1 et 200 $\mu$m, de préférence compris entre 5 et 30 $\mu$m.

La présente invention divulgue aussi un procédé de fabrication de microcapsules comportant les étapes suivantes :

- création d'une émulsion comprenant:
    - o un solvant organique formant une phase continue;
    - o une solution aqueuse comprenant un polyol formant la phase dispersée;
    - o un tensioactif;
- introduction dans ladite émulsion d'un réactif réagissant avec ledit polyol engendrant la polymérisation en surface de ladite substance formant ainsi une membrane autour de ladite substance pour former ladite microcapsule;
- lavage desdites microcapsules pour éliminer le réactif excédentaire.

Selon des modes préférés du procédé de l'invention, ce procédé comprend au moins une, ou une combinaison quelconque appropriée des caractéristiques suivantes :

- ledit réactif est un diisocyanate;
- ledit tensioactif est une composition comprenant au moins une substance tensioactive présentant une HLB comprise entre 1 et 8, de préférence entre 3 et 6.

Dans un autre aspect, l'invention divulgue un textile comportant des microcapsules telles que décrites ci-avant.
L'invention divulgue aussi l'utilisation du textile de l'invention pour le rafraîchissement du corps humain dans laquelle au moins une partie de l'humidité produite par la peau dudit corps humain diffuse au travers de ladite membrane et dissout ledit polyol. L'invention divulgue enfin une méthode de régénération de l'effet rafraîchissant d'un textile comportant des microcapsules selon l'invention comprenant le séchage dudit textile.

## Brève description des figures

La figure 1 représente une image en microscopie électronique à balayage d'un amas de microcapsules selon l'exemple 1.
La figure 2 représente une image en microscopie électronique à balayage de microcapsules selon l'exemple 6.
La figure 3 représente le processus d'absorption/ adsorption d'eau et de chaleur des microcapsules selon la présente invention.
La figure 4 représente une membrane comprenant à sa surface des fonctions réactives de type hydroxyle.
La figure 5 représente une fibre à la surface de laquelle on a greffé des microcapsules selon la présente invention.
La figure 6 représente le procédé selon la présente invention.

## Légende des figures

1 Microcapsule selon l'invention
2 Fibre textile
3 Membrane
4 Substance hygroscopique (active)
5 Substance hygroscopique (active) en solution aqueuse
6 Phase organique
7 Phase aqueuse (substance active+eau)
8 Emulsion, phase organique continue et phase aqueuse dispersée
9 Agitateur
10 Filtre
11 Gouttelettes de diisocyanate
12 Gouttelette de phase aqueuse (eau+substance active)
13 Phase organique
14 Microcapsules filtrées, rincées, et séchées.
15 Microcapsule greffée en surface d'une fibre textile

## Description détaillée de l'invention

La présente invention décrit des microcapsules 1 dans lesquelles on a incorporé des substances hygroscopiques 4 et solubles dans l'eau. Ces microcapsules 1 sont destinées à être incorporées dans des textiles en général, et dans l'habillement en particulier. Les substances hygroscopiques 4 choisies présentent aussi la particularité d'avoir une enthalpie de dissolution importante. Ces microcapsules 1 absorberont l'eau issue des phénomènes de sudation, et, de manière concomitante absorberont de la chaleur lors de la dissolution de la substance hygroscopique.

Parmi les avantages de l'utilisation de l'effet endothermique de dissolution pour l'obtention d'un effet rafraîchissant, par rapport à l'utilisation de la chaleur latente de fusion, on notera que l'effet est alors lié à la sudation plutôt qu'à une modification de température. La sudation étant elle-même déclenchée par une sensation de chaleur, l'effet rafraîchissant sera obtenu uniquement lorsque nécessaire.

Par microcapsule, on entend une substance hygroscopique 4 encapsulée dans une membrane 3.

Pour faciliter l'incorporation de ces microcapsules 1 dans ou sur les différents supports, elles seront de préférence de petite dimension, pour faciliter leur adhésion avec le textile et, également, augmenter les surfaces d'échange.

La présentation sous forme de microcapsules 1 permet d'améliorer en outre la thermorégulation et la cinétique d'absorption de la sueur pour permettre d'assécher rapidement la peau en cas de sudation importante.

Enfin, les membranes 3 des microcapsules présenteront une perméabilité à l'eau importante, permettant ainsi un échange d'eau entre l'environnement extérieur et le coeur des microcapsules. Ces membranes 3 doivent non seulement permettre la diffusion de l'eau issue des phénomènes de sudation lors de l'emploi du textile, mais aussi permettre l'évacuation de cette eau lors de phases de séchage(désorption), depuis le coeur hygroscopique vers l'extérieur. Ceci permettant la régénération des microcapsules 1 vers l'état initial.

Les membranes 3 seront donc substantiellement imperméables aux substances hygroscopiques utilisées comme substance active dans la microcapsule, même à l'état dissout. Cette imperméabilité permet aux microcapsules de maintenir leurs propriétés rafraîchissantes même après de multiples lavages.

Par substantiellement imperméable à la substance active, nous entendons que ladite membrane maintient encapsulé au moins 80% de la substance active lors de rinçages successifs, de préférence 90%, de manière particulièrement préférée 95%.

Il sera ainsi possible de contrôler les transferts hydriques tout en conservant la substance active, ce qui permet, par le séchage (desorption) des microcapsules 1, la réversibilité de l'effet rafraîchissant.

Les lavages seront idéalement suivis de séquences de séchage, permettant de re-solidifier les matériaux hygroscopiques par séchage (désorption), et de permettre ainsi une nouvelle utilisation du vêtement, ce dernier retrouvant alors ses propriétés rafraîchissantes.

De préférence, les membranes encapsulant la substance active seront de nature polymérique telle que des polyuréthannes ou des polyamides.

L'application des polyuréthannes comme polymère constituant les membranes des microcapsules représente une solution intéressante pour la réalisation de capteurs d'humidité en raison des propriétés de perméabilité des polyuréthannes.

Les microcapsules de l'invention sont soit mononucléiques, présentant une structure classique de type core/shell (coeur/couronne), soit polynucléique, présentant une structure « matrice continue/nodule dispersés », la phase dispersée ou le coeur étant constitués du composé hygroscopique soluble, la membrane externe ou la matrice étant constituée par le matériau perméable à l'eau.

Tous les matériaux présentant une enthalpie de dissolution positive (réaction endothermique) pourraient être utilisés comme substance active. Néanmoins, ce seront de préférence, des composés de masse moléculaire importante. En effet, il sera plus aisé de maintenir des molécules de haute masse dans les microcapsules lors des rinçages successifs que des composés légers et solubles. Par exemple, les polyols présentent de bonnes propriétés à la fois thermique, et d'absence de diffusion au travers des membranes.

Dans cette famille de substances hygroscopique, on préfèrera le xylitol (2R,3R,4S)-pentane-1,2,3,4,5-pentanol), le sorbitol ((2R,3S,4S,5S)-Hexane-1,2,3,4,5,6-hexol), le D-mannitol (hexane-1,2,3,4,5,6-hexol), l'Erythritol ((2R, 3S)-butane-1,2,3,4-tetraol) ou un mélange de ceux-ci.

Avantageusement, les microcapsules de l'invention, présentent des propriétés hygroscopiques permettant d'absorber des mouillures de peau importantes. Ce haut pouvoir d'absorption s'accompagnera d'une enthalpie de dissolution supérieure à environ 20 J/g à 35°C, de préférence supérieure à 50 J/g à 35°C, avantageusement comprise entre 80 et 160 J/g à 35°C.

La présente invention décrit aussi un procédé de production de microcapsules telles que décrites ci-avant. En particulier, ce procédé décrit la production de microcapsules comprenant un ou des coeurs comprenant des polyols solubles, et des membranes comprenant du polyuréthanne réticulé. Dans ce procédé, la microencapsulation débute par une étape d'émulsion d'une phase aqueuse comprenant le polyol dispersé dans une phase organique continue (voir figure 6).

Afin de mieux contrôler la structure de l'émulsion, on ajoutera de préférence un tensio-actif. Un tensioactif est un composé amphiphile, c'est-à-dire constitué d'une ou plusieurs partie(s) hydrophile(s) associée(s) à une ou plusieurs partie(s) hydrophobe(s) qui ont chacune une affinité particulière pour chacun des solvants mis en contact.

Le tensio-actif est donc ici un agent stabilisant jouant deux rôles : il réduit la tension interfaciale entre deux phases favorisant la stabilisation de l'émulsion, et il crée une barrière stérique, évitant une coalescence des gouttelettes de façon à ce qu'une étroite distribution en taille puisse être obtenue.

On définit l'expression de l'importance relative de la partie hydrophile et hydrophobe d'une molécule de tensioactif par sa Balance Lipophile-Hydrophile, ou HLB. Les valeurs de HLB sont comprises entre 0 et 20. Les tensioactifs de faible HLB seront fortement lipophiles, tandis que ceux de forte HLB seront plutôt hydrophiles.

En connaissant la $HLB_i$ de plusieurs tensioactifs, on peut calculer la $HLB_{mélange}$ de leur mélange selon la formule suivante :

$$HLB_{mélange} = \sum_i w_i HLB_i$$

Où $HLB_i$ est la balance lipophile/ hydrophile du tensioactif i, et $w_i$ est la fraction massique du tensioactif i dans le mélange.

Dans la présente invention, on préférera des tensioactifs présentant une balance hydrophile/lipophile (HLB) comprise entre 1 et 8, de manière particulièrement préférée comprise entre 3 et 6.

Pour la formation des membranes polyuréthannes, les polymères constitutifs des membranes des capsules sont formés in situ par polymérisation interfaciale en milieu dispersé directement avec les liaisons alcools du polyol contenu au coeur des gouttelettes. La réaction type est présentée ci-après :

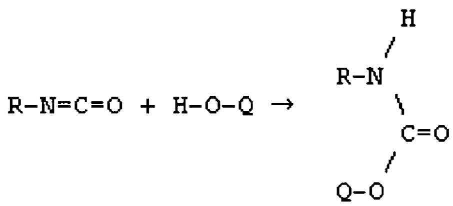

Où R- comprend une fonction isocyanate et Q- est un polyol.

De nombreux composés peuvent être utilisés pour réagir par polymérisation à l'interface avec les liaisons alcools des polyols présents. Ce composé monomère peut être de tout type connu de l'homme du métier spécialisé dans le domaine de la chimie organique. On préfèrera avantageusement les composés isocyanates d'une fonctionnalité moyenne supérieure à 2.

Ce monomère permet la création d'une membrane perméable à l'eau avec l'actif polyol, et peut par exemple être choisi parmi l'IPDI (Isophorone diisocyanate), l'HDI (Hexaméthylène diisocyanate), le MDI (Méthylène diphényle diisocyanate modifié), le TDI (toluène diisocyanate) ou un mélange de ceux-ci.

Selon le pourcentage de monomère isocyanate introduit, il sera possible de contrôler le niveau de perméabilité de la membrane 3, permettant un transfert de l'humidité entre la substance active au coeur de la microcapsule 1 et le milieu environnant.

Un compromis a dû être trouvé entre deux impératifs antagonistes: à savoir une bonne perméabilité de la membrane 3 à l'eau, et des propriétés barrière à la substance active, assurant ainsi la réversibilité du système auto-rafraîchissant. En particulier, un niveau de réticulation trop important induira une perméabilité à l'eau trop faible, et, donc, des cinétiques d'absorption trop lentes; tandis qu'un niveau de réticulation trop faible ne permettra pas à la membrane formée d'empêcher la diffusion de la substance active vers l'extérieur.

Le diamètre des capsules peut varier dans de très larges proportions et est généralement compris entre quelques nanomètres et quelques centaines de micromètres. Cependant, afin de conserver des qualités satisfaisantes au toucher, les capsules possèdent de préférence un diamètre compris entre environ 0,1 $\mu$m et environ 50 $\mu$m, avantageusement, les capsules ont un diamètre compris entre 5 et 30$\mu$m.

Les microcapsules de l'invention seront ensuite fixées durablement à des fibres textiles, afin de résister à l'usure et aux lavages successifs. Par exemple, on mettra à profit des fonctions réactives laissées en surface des membranes à la fin du procédé de synthèse (voir figure 4). A titre d'exemple, des diisocyanates peuvent être utilisés pour le greffage des microcapsules sur les fibres textiles.

Le procédé comporte alors les étapes suivantes:

- activer la surface des fibres si nécessaire, par traitement physique (plasma) ou chimique (peroxides), de manière à créer des fonctions réactives sur le support;
- greffer sur ces fonctions un des groupes réactifs de liants bi-fonctionnels, tel que des diisocyanates;
- greffer les microcapsules sur le second groupe réactif des liants bifonctionnels au moyen des fonctions réactives présentes à la surface des microcapsules.

La présente invention est décrite plus en détail dans les exemples particuliers de réalisation qui suivent. Ces exemples ne présentent qu'un caractère illustratif et n'ont aucunement pour but de limiter l'invention.

**<u>Exemple 1</u>**

<u>Etape a) Dispersion</u>

60 ml d'une solution aqueuse de xylitol (Roquette frères, pureté supérieure à 99%) à 70% en volume est émulsionnée dans 120 ml d'un solvant organique de toluène avec un tensioactif de HLB = 3,0. Ce tensioactif est un mélange de Span 85 ( Trioleate de Sorbitan, HLB = 1,8), et de PEG 400 (Poly Ethylène Glycol, HLB = 8,3) en proportion massiques respectives 81,5% et 18,5%, fournis par Aldrich. Ce tensioactif est ajouté dans l'émulsion à 10% en masse par rapport au xylitol, à 80°C dans un bain de glycol thermorégulé sous vive agitation. Le taux de cisaillement permettant d'émulsionner le mélange est obtenu au moyen d'un homogénéiseur ultra turrax®, produit par l'entreprise allemande Ika, et tournant à 13500 rpm. pendant 20 minutes.

<u>Etape b) Formation de la membrane primaire</u>

Lorsque l'émulsion établie est stable, une solution de MDI dissout dans 20ml de solvant organique est introduite goutte à goutte à l'aide d'une seringue. Au total, le ratio molaire du MDI introduit par rapport au Xylitol introduit à l'étape précédente est de $17{,}7.10^{-2}$.

<u>Etape c) Polymérisation, lavages, séchage</u>

La synthèse est poursuivie pendant 1 heure 30 minutes à 80°C sous agitation à la pale, les microcapsules sont filtrées, lavées à l'aide d'un solvant organique pour éliminer l'isocyanate résiduel et à l'eau pour les traces de xylitol, puis séchées pendant une nuit à 60°C avant analyse.
Le rendement de synthèse, calculé par la formule suivante :

$$\eta = \frac{100 \times m_{capsules}}{m_{diisocyanate} + m_{xylitol} + m_{water}}$$

Ce calcul tient compte de la masse d'eau, qui ne sert qu'en partie à la formation de liaisons urée dans la membrane, le reste étant évaporé lors des étapes ultérieures. Cette indication montre que le calcul du rendement n'est donné qu'à titre indicatif.
Il est de 55,7%.
Le diamètre moyen mesuré est de 15,3 μm +/- 2,1 μm.
Par Calorimétrie Différentielle, les analyses des thermogrammes DSC menés à 1°C/min sous azote indiquent une enthalpie de fusion du xylitol à Tf=92,8°C d'environ ΔHf=189,0J/g, représentant un taux en xylitol de l'ordre de 77,5% par rapport à l'enthalpie du pic de fusion du xylitol pur ayant une enthalpie de fusion ΔHf=243,9 J/g.
Les enthalpies de dissolution ont été mesurées au moyen d'un Calorimètre C80 de type Type Tian-Calvet en mode isotherme de la manière décrite ci-après. Les microcapsules, sous forme de poudre, sont introduites dans le compartiment bas d'une cellule de mesure. Le compartiment bas est fermé par un bouchon et l'ensemble est vissé dans le corps d'une cellule. Enfin de l'eau est introduite au dessus du bouchon. Dans une cellule de référence, la même masse d'eau est introduite au dessus du bouchon, le compartiment bas restant vide : il s'agit ici d'équilibrer le calorimètre.
Pour toutes les expériences une masse d'eau égale à la moitié de la masse d'échantillon est introduite dans la cellule. La température du calorimètre est maintenue à 35°C.
Les deux cellules sont introduites dans le calorimètre et lorsque la ligne de base est stable l'acquisition peut démarrer pour 2 heures. Après environ 10 minutes, les cellules sont mécaniquement retournées environ 6 fois de façon à mélanger l'eau et la poudre.
Le tableau 1 présente les enthalpies de dissolution observées pour cet exemple. Des échantillons de microcapsules ont en outre été rincés de 1 à 3 fois dans de l'eau à température ambiante.

**Tableau 1 Enthalpie de dissolution, exemple 1, influence des rinçages**

| N rinçage | **Enthalpie (J/g)** |
|---|---|
| 0 | 124,3 |
| 1 | 120,6 |
| 2 | 112,3 |
| 3 | 121,5 |

On observera la stabilité de l'effet thermique de dissolution malgré les rinçages successifs, démontrant le caractère imperméable de la membrane par rapport à la substance active.

## Exemple 2

Le protocole de synthèse utilisé est celui décrit précédemment dans l'exemple 1, seul le ratio molaire du MDI introduit dans le milieu réactionnel étape b) par rapport au xylitol est modifiée à $11{,}7.10^{-2}$.
Le rendement de synthèse est de 18,0%.
Le diamètre moyen mesuré des capsules est de 15,74 μm +/-1,12 μm en suspension.
Par Calorimétrie Différentielle, les analyses des thermogrammes DSC indiquent la présence de xylitol avec une température de fusion Tf= 95,1°C
Par calorimétrie de mélange, on peut observer une enthalpie de dissolution de 24,4 J/g à 35°C.

## Exemple 3

Le protocole de synthèse utilisé est celui décrit précédemment dans l'exemple 1, seul le ratio molaire du MDI introduit dans le milieu réactionnel étape b) par rapport au xylitol est modifiée à $22{,}6.10^{-2}$.
Le rendement de synthèse est de 51,8%.
Le diamètre moyen des capsules est de 17,4μm +/-1,4 μm.
Par Calorimétrie Différentielle, les analyses des thermogrammes DSC indiquent une enthalpie de fusion du xylitol à Tf= 93,8°C de ΔHf = 133,9J/g, représentant un taux d'actif en xylitol de l'ordre de 54,9% par rapport à l'enthalpie

du pic de fusion du xylitol pur.

Par calorimétrie de mélange, on peut observer une enthalpie de dissolution de 38,1 J/g à 35°C.

**Exemple 4**

Le protocole de synthèse utilisé est celui décrit précédemment dans l'exemple 1, seul la vitesse de cisaillement dans le milieu réactionnel lors de l'étape a) est modifiée à 16000 rpm., et le ratio molaire du MDI introduit dans le milieu réactionnel étape b) par rapport au xylitol est modifiée à $18,2.10^{-2}$.

Le rendement de synthèse est de 57,5%.

Le diamètre moyen des capsules est de 11,2 $\mu$m +/- 1,1 $\mu$m.

Par Calorimétrie Différentielle, les analyses des thermogrammes DSC indiquent une enthalpie de fusion du xylitol à Tf= 93,7°C de $\Delta$Hf = 157,4J/g, représentant un taux d'actif en xylitol de l'ordre de 64,5% par rapport à l'enthalpie du pic de fusion du xylitol pur.

Par calorimétrie de mélange, on peut observer une enthalpie de dissolution de 85,8 J/g à 35°C.

**Exemple 5**

Le protocole de synthèse utilisé est celui décrit précédemment dans l'exemple 1, seul la vitesse de cisaillement dans le milieu réactionnel lors de l'étape a) est modifiée à 11000 rpm., et le ratio molaire du MDI introduit dans le milieu réactionnel étape b) par rapport au xylitol est modifiée à $18,2.10^{-2}$.

Le rendement de synthèse est de 63,8%.

Le diamètre moyen des capsules est de 14,4 $\mu$m +/- 2,2 $\mu$m.

Par Calorimétrie Différentielle, les analyses des thermogrammes DSC indiquent une enthalpie de fusion du xylitol à Tf= 93,9°C de $\Delta$Hf = 143,4J/g, représentant un taux d'actif en xylitol de l'ordre de 58,8% par rapport à l'enthalpie du pic de fusion du xylitol pur.

Par calorimétrie de mélange, on peut observer une enthalpie de dissolution de 29,4 J/g à 35°C.

**Exemple 6**

Le protocole de synthèse utilisé est celui décrit précédemment dans l'exemple 1, seul la vitesse de cisaillement dans le milieu réactionnel lors de l'étape a) est modifiée à 6500 rpm., et le ratio molaire du MDI introduit dans le milieu réactionnel étape b) par rapport au xylitol est modifiée à $18,2.10^{-2}$.

Le rendement de synthèse est de 60,9%.

Le diamètre moyen des capsules est de 19,3 $\mu$m +/- 2,7 $\mu$m.

Par Calorimétrie Différentielle, les analyses des thermogrammes DSC indiquent une enthalpie de fusion du xylitol à Tf= 93,8°C de $\Delta$Hf = 188,4J/g, représentant un taux d'actif en xylitol de l'ordre de 77,2% par rapport à l'enthalpie du pic de fusion du xylitol pur.

Afin d'observer l'éventuel perte de substance active des microcapsules lors de nettoyages successifs, plusieurs lavages à l'eau distillée à température ambiante sont réalisés. Les résultats de mesure d'enthalpie de dissolution sont présentés au tableau 2.

**Tableau 2 Enthalpie de dissolution en fonction des rinçages successifs (exemple 6)**

| N rinçage | Enthalpie (J/g) |
|---|---|
| 0 | 103,6 |
| 1 | 127,0 |
| 2 | 112,7 |

La présence d'une enthalpie de dissolution supérieure après un premier rinçage par rapport à l'enthalpie sans rinçage indique que cette variation est vraisemblablement due à d'autres facteurs que le rinçage (variabilité d'échantillonnage, conditions de séchage préalable,...), la substance active est donc ici aussi maintenue dans les microcapsules, malgré les rinçages.

**Exemple 7**

Le protocole de synthèse utilisé est celui décrit précédemment dans l'exemple 1, seul la vitesse de cisaillement

dans le milieu réactionnel lors de l'étape a) est modifiée à 6500 rpm., et le ratio molaire du MDI introduit dans le milieu réactionnel étape b) par rapport au xylitol est modifiée à $18,2.10^{-2}$.
Le rendement de synthèse est de 64,4%.
Le diamètre moyen des capsules est de 21,1 µm +/- 2,1 µm.

Par Calorimétrie Différentielle, les analyses des thermogrammes DSC indiquent une enthalpie de fusion du xylitol à Tf= 93,9°C de ΔHf = 174,4J/g, représentant un taux d'actif en xylitol de l'ordre de 71,5% par rapport à l'enthalpie du pic de fusion du xylitol pur.
L'enthalpie de dissolution observée est de 109,4J/g.

**Exemple 8**

Le protocole de synthèse utilisé est celui décrit précédemment dans l'exemple 1, seul la vitesse de cisaillement dans le milieu réactionnel lors de l'étape a) est modifiée à 6500 rpm., et le ratio molaire du MDI introduit dans le milieu réactionnel étape b) par rapport au xylitol est modifiée à $24,3.10^{-2}$.
Le rendement de synthèse est de 67,3%.
Le diamètre moyen mesuré est de 16,64 µm +/- 2,4 µm.
L'enthalpie de dissolution observée est de 38,7 J/g.

On trouvera au tableau 3 le résumé des résultats obtenus dans les exemples.

Tableau 3

| Exemple | Ratio molaire MDI/xylitol (%) | Cisaillement rpm | Diamètre moyen µm | Enthalpie de dissolution J/g |
|---|---|---|---|---|
| 1 | 17,7 | 13500 | 15,3 | 124,33 |
| 2 | 11,7 | 13500 | 15,7 | 24,36 |
| 3 | 22,6 | 13500 | 17,4 | 38,14 |
| 4 | 18,2 | 16000 | 11,3 | 85,83 |
| 5 | 18,2 | 11000 | 14,4 | 29,43 |
| 6 | 18,2 | 6500 | 19,3 | 103,63 |
| 7 | 18,2 | 6500 | 21,1 | 109,38 |
| 8 | 24,3 | 6500 | 16,6 | 38,66 |

**Revendications**

1. Microcapsules (1) pour textile auto-rafraîchissant, ladite microcapsule comprenant une membrane (3) encapsulant un polyol (4), ladite membrane étant perméable à l'eau et substantiellement imperméable au polyol.

2. Microcapsules (1) selon la revendication 1 dans lesquelles ledit polyol est sélectionné parmi le groupe du Xylitol, du Sorbitol, du D-mannitol et de l'Erythritol.

3. Microcapsules (1) selon la revendication 1 ou 2 dans lesquelles lesdites membranes (3) sont des membranes de polymères.

4. Microcapsules (1) selon la revendication 3 dans lesquelles lesdites membranes (3) sont des membranes de polyuréthanne.

5. Microcapsules (1) selon l'une quelconque des revendications précédentes ayant un diamètre compris entre 0,1 et 200 µm.

6. Microcapsules (1) selon l'une quelconque des revendications précédentes ayant un diamètre compris entre 5 et 30 µm.

7. Procédé de fabrication des microcapsules (1) selon les revendications 1 à 6 comportant les étapes suivantes :

- création d'une émulsion (8) comprenant:

o un solvant organique formant une phase continue (6);
o une solution aqueuse (7) comprenant un polyol formant la phase dispersée;
o un tensioactif;

- introduction dans ladite émulsion (8) d'un réactif (11) réagissant avec ledit polyol engendrant la polymérisation en surface de ladite substance formant ainsi une membrane (3) autour de ladite substance pour former ladite microcapsule (1,2);
- lavage desdites microcapsules (1) pour éliminer le réactif excédentaire.

**8.** Procédé de fabrication des microcapsules selon la revendication 7 **caractérisé en ce que** ledit réactif est un diisocyanate.

**9.** Procédé de fabrication des microcapsules selon la revendication 7 ou 8 **caractérisé en ce que** ledit tensioactif est une composition comprenant au moins une substance tensioactive, ladite composition présentant une HLB comprise entre 1 et 8.

**10.** Procédé de fabrication des microcapsules selon la revendication 9 **caractérisé en ce que** ladite composition présente une HLB comprise entre 3 et 6.

**11.** Textile comportant des microcapsules selon l'une quelconque des revendications 1 à 6.

**12.** Méthode de régénération de l'effet rafraîchissant d'un textile selon la revendication 11 comprenant le séchage dudit textile.

**13.** Utilisation du textile de la revendication 11 pour le rafraîchissement du corps humain dans laquelle au moins une partie de l'humidité produite par la peau dudit corps humain diffuse au travers de ladite membrane et dissout ledit polyol.

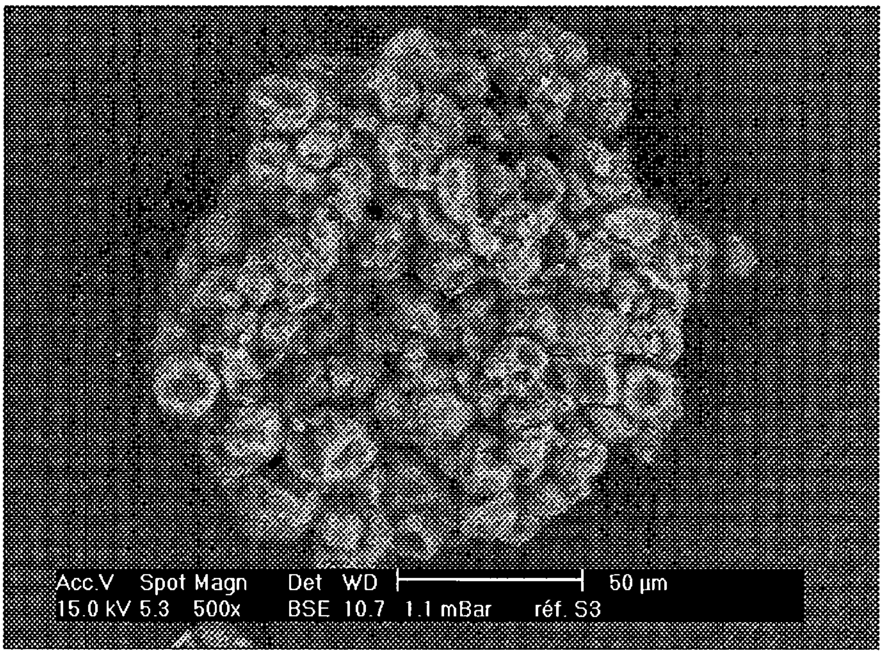


Figure 1

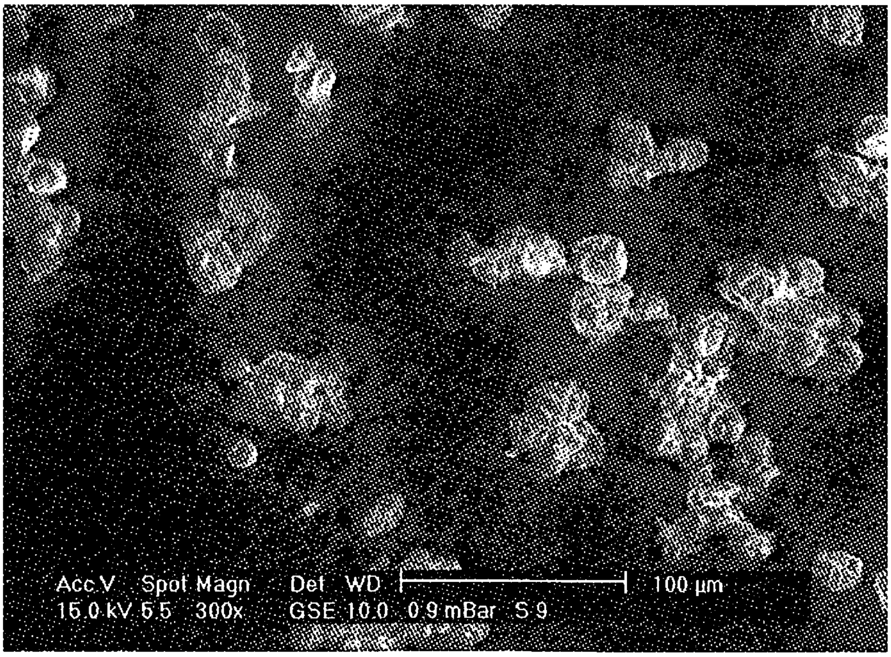


Figure 2

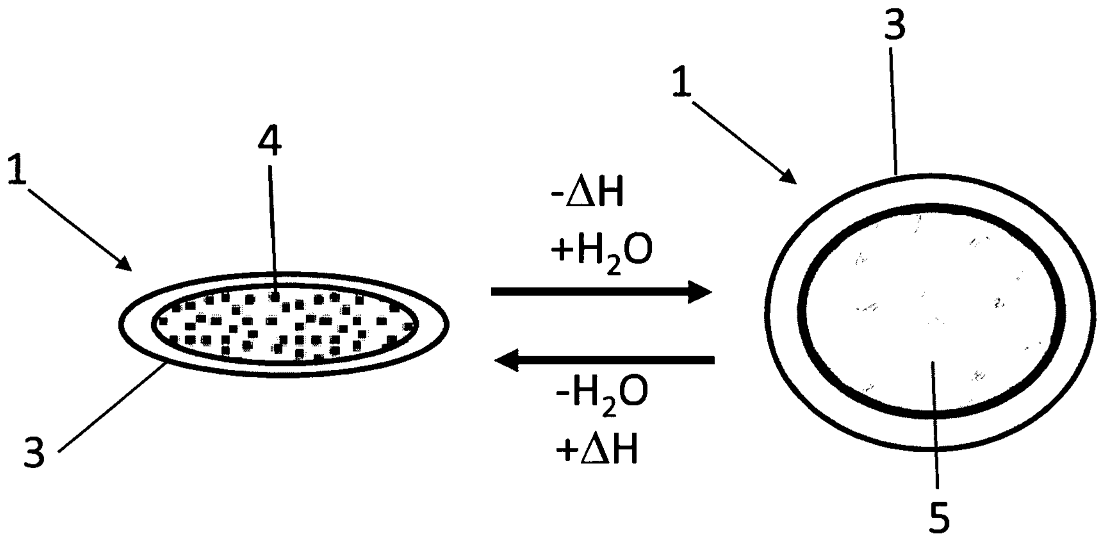


Figure 3

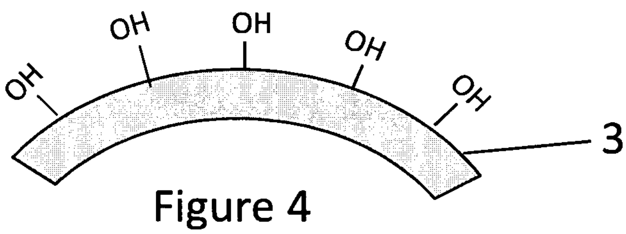


Figure 4

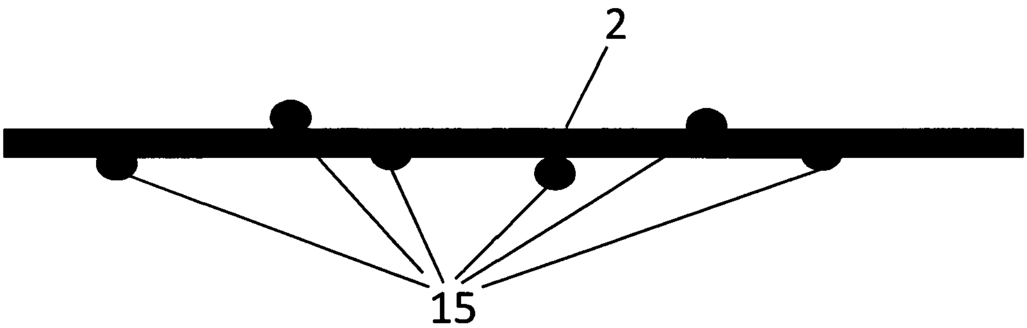


Figure 5

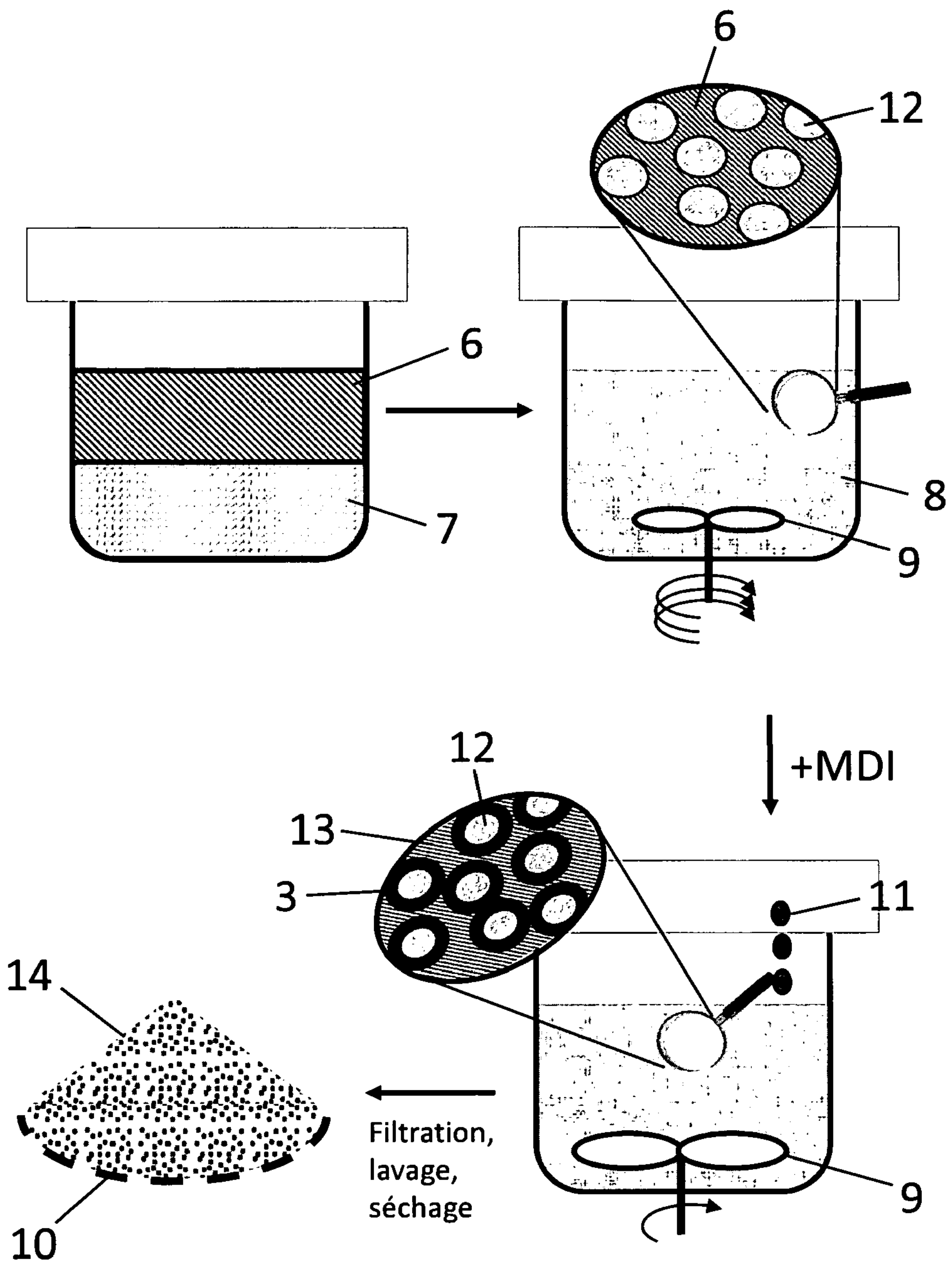


Figure 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2006118708 A
- WO 2007078362 A